(19) Europäisches Patentamt / European Patent Office / Office européen des brevets

(11) **EP 3 775 992 B1**

(12) **EUROPEAN PATENT SPECIFICATION**

(45) Date of publication and mention
of the grant of the patent:
**05.07.2023 Bulletin 2023/27**

(21) Application number: **19721671.6**

(22) Date of filing: **28.03.2019**

(51) International Patent Classification (IPC):
**G01C 21/20** (2006.01)      **G01S 17/34** (2020.01)
**G01S 17/58** (2006.01)      **G01S 17/93** (2020.01)
**G01S 19/48** (2010.01)      **G01C 21/16** (2006.01)

(52) Cooperative Patent Classification (CPC):
**G01C 21/20; G01C 21/1652; G01C 21/1656;
G01S 17/34; G01S 17/58; G01S 17/93;
G01S 19/485**

(86) International application number:
**PCT/GB2019/050893**

(87) International publication number:
**WO 2019/186172 (03.10.2019 Gazette 2019/40)**

(54) **NAVIGATION APPARATUS AND METHOD**

NAVIGATIONSVORRICHTUNG UND -VERFAHREN

APPAREIL ET PROCÉDÉ DE NAVIGATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2018 US 201815932639**

(43) Date of publication of application:
**17.02.2021 Bulletin 2021/07**

(73) Proprietor: **Psionic LLC
Hampton, VA 23666 (US)**

(72) Inventors:
• **PARKER SANDFORD, Stephen
Hampton, Virginia 23666 (US)**
• **PIERROTTET, Diego Fernando
Hampton, Virginia 23666 (US)**

(74) Representative: **Williams Powell
5 Chancery Lane
London WC2A 1LG (GB)**

(56) References cited:
EP-A1- 1 555 545      US-A1- 2008 239 279
US-A1- 2014 036 252      US-A1- 2017 116 867

• AMZAJERDIAN FARZIN ET AL: "Imaging flash LIDAR for safe landing on solar system bodies and spacecraft rendezvous and docking", VISUAL COMMUNICATIONS AND IMAGE PROCESSING; 20-1-2004 - 20-1-2004; SAN JOSE,, vol. 9465, 19 May 2015 (2015-05-19), pages 946502-946502, XP060054770, DOI: 10.1117/12.2178410 ISBN: 978-1-62841-730-2
• NINGFANG SONG ET AL: "Impact of transmitting light's modulation characteristics on LFMCW Lidar systems", OPTICS AND LASER TECHNOLOGY, ELSEVIER SCIENCE PUBLISHERS BV., AMSTERDAM, NL, vol. 44, no. 2, 15 August 2011 (2011-08-15), pages 452-458, XP028391451, ISSN: 0030-3992, DOI: 10.1016/J.OPTLASTEC.2011.08.011 [retrieved on 2011-08-25]

## Description

## TECHNICAL FIELD

The present invention relates to a navigation method and apparatus that is particularly applicable for use in environments where GPS (Global Positioning System) is unavailable.

## BACKGROUND TO THE INVENTION

Navigation is a process that ideally begins with an absolute knowledge of one's location. The goal is to reach a destination located somewhere else. Once movement begins many navigation systems need to know how fast one is moving (v = speed), in what direction (heading), and how long (t = time elapsed) one moves at that speed in that direction. If these are known without error then the equation vt = x gives the current location, x, at time t. Errors in speed, timing or direction will introduce uncertainty in the new location.

For aerial vehicles there are three angles of orientation (pitch, roll, and yaw) and three position coordinates (x, y, and height above the ground) that can change with time. These six degrees of freedom (6-DOF) means there are six variables that need to be measured in order to know where one is at any particular time. For ground vehicles that travel in the plane of a surface then there are only two position coordinates (x and y) and one angle (yaw) that need to be measured to know where one is at any particular time. This is a 3 degree of freedom (3-DOF) problem. The same general principles of navigation apply and low-error measurements of speed relative to the ground provides a powerful new navigation capability.

The Global Positioning System (GPS) comprises a set of satellites in orbit which transmit signals toward the surface of the Earth. A person on the ground may use the signals received by a GPS radio to determine his or her location or altitude, typically by triangulation using multiple received signals and knowledge of their respective satellites' relative positioning.

In some situations and conditions, the GPS is unavailable. A location, area or region which does not offer location service via the GPS is called a "GPS denied environment". This environment or condition can occur or be caused by geographical or topological constraints, or by the deliberate action of persons who seek to disable the GPS service. For example, an enemy on a battlefield may seek to jam or to interfere with the GPS service to deny its use to, or misdirect, an adversary.

In this situation, a person, a vehicle or some other user needs some other apparatus and/or hardware to accurately determine location and/or altitude without the benefit of GPS.

The development of a system that enables a user or an automated controller to determine information such as position, orientation, location, altitude, velocity, acceleration or other geodetic, calibration or measurement information would be a major technological advance, and would satisfy long-felt needs in the satellite and telecommunications industries.

US 2008/239279 discloses a LIDAR based motion estimation system for navigation. The document "Imaging flash LIDAR for safe landing on solar system bodies and spacecraft rendezvous and docking" by Amzajerdian et al XP 060054770 discusses NASA's uses of flash LIDAR. The document "Impact of transmitting light's modulation characteristics on LFMCW Lidar systems" by Song et al XP028391451 discusses experiments on Lidar in range and velocity measurement.

## STATEMENT OF INVENTION

According to an aspect of the present invention, there is provided an apparatus for providing navigation data for a vehicle as claimed in claim 1. According to another aspect of the present invention, there is provided a method as claimed in claim 11.

## A BRIEF DESCRIPTION OF THE DRAWINGS

Embodiments of the present invention will now be described, by way of example only and with reference to the accompanying drawings in which:

Figure 1 is a generalized view of one embodiment of a System for Navigation in a GPS Denied Environment.

Figures 2 & 3 are schematic illustrations of generalized sensor system reference frames, including a universal reference frame, a vehicle reference frame, and a target reference frame.

Figure 4 presents a schematic view of the elements of one embodiment of the present invention.

Figure 5 is a schematic block diagram of one embodiment of a Navigation Reference Sensor.

Figure 6 is a schematic block diagram of one embodiment of an Area Range & Velocity Sensor.

Figure 7 is a schematic block diagram of one embodiment of a Range Doppler Processor.

Figure 8 is a flow chart that reveals the method steps that are implemented in one embodiment of a Location Processor.

Figure 9 portrays instruments in a helicopter that supply navigation information.

Figure 10 depicts navigation attributes that are employed in one embodiment of the present invention.

Figure 11 furnishes a flow chart of method steps pertaining to Coherent LIDAR Operation which are implemented in one embodiment of the present invention.

Figure 12 provides a flow chart of method steps pertaining to an algorithm for determining the location of a vehicle which are implemented in one embodiment of the present invention.

Figure 13 offers a schematic view of a ground vehicle which utilizes an alternative embodiment of the invention to find an optimized path that avoids an accident.

Figure 14 supplies a schematic view of a ground vehicle which employs an alternative embodiment of the invention to recover after loss of control.

Figure 15 depicts an In-Vehicle Interface Display for a ground vehicle that may be used in an alternative embodiment of the invention.

Figure 16 depicts another view of an In-Vehicle Interface Display for a ground vehicle that may be used in an alternative embodiment of the invention.

Figure 17 is a schematic view of an Intelligent Transportation System that includes Area Situational Awareness.

Figure 18 is a schematic view of an Intelligent Transportation System that includes Area Situational Awareness.

Figure 19 provides yet another schematic view of which illustrates Situational Awareness and Hazard Avoidance.

Figure 20 exhibits another schematic view of a ground vehicle which utilizes Situational Awareness and Hazard Avoidance.

Figure 21 offers a schematic view of yet another alternative embodiment of the present invention, showing an aircraft landing on the deck of an aircraft carrier.

*Figure 22* depicts the frequency content of the transmitted and associated received waveform as a function of time.

Figure 23 is a vector representation of a D-LIDAR system used in one embodiment.

Figure 24 illustrates angles involved in calculations of pitch, roll and yaw.

**Detailed Description**

I. Overview of Preferred & Alternative Embodiments the Invention

Embodiments of the present invention seek to enable stealthy, self-reliant, accurate, long-distance navigation by using laser light and coherent receivers configured to provide speed in the sensor frame of reference, and with respect to objects and other vehicles in its environment. The use of laser light means detection by adversaries is extremely difficult and also provides high precision measurements. Coherent receivers allow very high signal-to-noise ratio (SNR) measurements of speed along the laser beam line of sight with very low probability of interference from other nearby laser based signals. For ground and aerial systems distance and velocity measurements are relative to the plane formed by the ground. Using more than one beam, embodiments of the present invention measure speed with respect to the ground or the other objects/vehicles in more than one direction allowing either 2-D or 3-D position determination as well as other useful vehicle state parameters, including the speed and direction of the other objects/vehicles in its environment (sensor reference frame). A clock and heading information updates using compass, gyroscope, star tracker and/or a terrain matching system completes the fully self-contained navigation system of preferred embodiments, although it will be appreciated that embodiments may be directed to individual components of the overall system and these may be provided as retrofit or additions to existing vehicles or navigation systems..

In situations where it is not desired or feasible to provide human control or when human abilities are inadequate for safe operations, it is necessary for vehicles to autonomously plan their trajectory, navigate to their destination and control their position and attitude. To safely and reliably accomplish this objective, they must be able to sense their environment with enough accuracy and precision to make and execute appropriate decisions. Clutter free, high signal to noise ratio velocity and range measurements offer a particularly elegant solution.

Specific problems demanding this system include navigating or landing on heavenly bodies without human aid, rendezvous and proximity operations (inspection, berthing, docking) in space, driverless cars, trucks and military vehicles, aerial vehicles in GPS denied environments.

Current navigation systems use inertial measurement systems that accumulate velocity errors relatively quickly leading to large uncertainties in a vehicle's position after relatively short periods of time. Space-based or ground based beacons like GPS or LORAN (Long Range Navigation) can provide position information through triangulation techniques but are susceptible to hostile actors who can either jam these signals or worse spoil them such that they provide undetectably incorrect position readings. Previous systems use sensors like accelerometers, oscillators, gyroscopes, odometers and speedometers of various types, GPS signals, other triangulation beacon systems, cameras, RADAR (Radio Detection and Ranging), SONAR (Sound Navigation and Ranging), and LIDAR (Light Detection and Ranging).

These fall into two groups: onboard sensors and externally delivered information signals. The limitations of the onboard sensors are their systematic errors which accumulate over time and give inadequate knowledge for accurate navigation, and a high degree of multi-target clutter, confusing signal interpretation. The limitation of externally delivered signals is their availability. They are not available underground or in space and can be jammed or spoofed on Earth.

Current navigation systems use inertial measurement systems that accumulate velocity errors relatively quickly leading to large uncertainties in a vehicle's position after relatively short periods of time. Space-based or ground based beacons like GPS or LORAN can provide position information through triangulation techniques but are susceptible to hostile actors who can either jam these signals or worse spoil them such that they provide undetectably incorrect position readings. Embodiments of the present invention seek to enable accurate navigation with generally insignificant errors over long periods of time using only onboard instruments allowing vehicles to be self-reliant for navigation information.

Previous on-board navigation systems can use radar to provide navigation information superior to inertial measurement systems that use gyros or accelerometers but these also provide hostile actors with knowledge of the trajectory of the vehicle. Embodiments of the present invention seek to allow accurate navigation and very low probability of detection by other entities and faster environmental situational awareness.

The key advantages of embodiments of the present invention over previous systems are the low systematic error and the low chance of detection due to the nature of the light used to determine the navigation parameters. The uniqueness of the present invention's detection methodology provides clutter free, closed-channel signal acquisition making the system able to operate in a high target traffic environment.

Existing systems do not accurately measure ground velocity. They make measurements of acceleration using an accelerometer. Velocity is the integral over time of acceleration, but integration always has an arbitrary constant associated with it. This manifests as a systematic error in position that increases with time. Although there exist a wide range of accelerometers available ranging in cost from 1 US Dollar to thousands of US Dollars each, even the best units exhibit systematic error. The longer the trip, the more this systematic error accumulates.

Embodiments of the present invention do not rely on measurements and sensors that introduce systematic error through integration. In preferred embodiments, velocity is directly measured using frequency modulated doppler lidar as is discussed in more detail below. This, in combination with range based measurements to targets in the environment and/or to a reference target enable accurate positioning and navigation of the vehicle in the environment.

In preferred embodiments, reference sensors are combined with sense-and-avoid sensors into a single system that provide navigation data at an accuracy and speed unavailable until now.

In embodiments of the present invention, a reference sensor allows the sense and avoid sensor to deliver referenced velocities for the objects in its environment. In turn the situational sensors provide additional data that can improve the reference sensor measurements, especially for guidance, navigation and control purposes.

As will be appreciated, embodiments of the present invention seek to provide key information to vehicle guidance, navigation and control systems, specifically, velocity vectors and range, with derivable information about surface relative attitude, side-slip angle, angle of approach, and altitude. As these parameters are measured with high accuracy, they will enable safe and reliable human driven and autonomous cars and trucks and enable aerial vehicles (with and without pilots) to navigate without GPS or other external signals. In current cars, one embodiment of the present invention enables automobiles to recover from currently uncontrollable spins and situations where the vehicle is sliding sideways or spinning and cannot determine their position or direction.

Embodiments of the present invention may be implemented in ADAS 3-5 (Advanced Driver Assistance) vehicles, both civilian and military as well as piloted and unpiloted aircraft, especially those requiring VTOL (Vertical Take Off and Landing) and the capability to fly without GPS navigation signals. Another embodiment of the invention may be used as navigation sensors for crew and cargo delivery to planetary bodies such as the Moon, Mars or asteroids by commercial space companies.

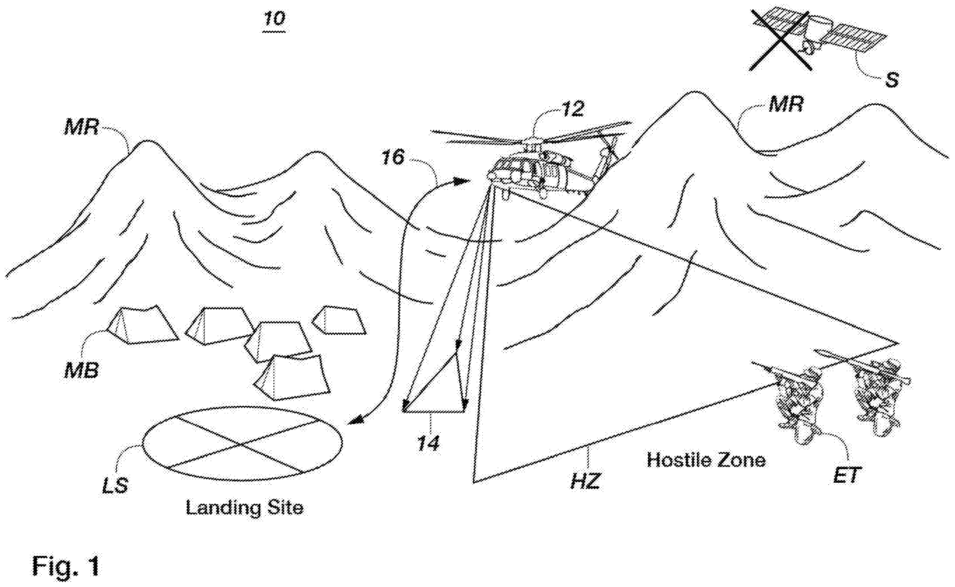

Figure 1 is a generalized view of one embodiment of the present invention 10, which is utilized in a GPS Denied Environment. A GPS satellite S is shown over the landscape shown in Figure 1, but is unavailable to provide navigation services, due to the efforts of hostile or unfriendly forces in the area. These hostile or unfriendly forces may be jamming or spoiling GPS signals with specialized radios.

An airborne vehicle 12, such as a helicopter, is shown flying over a hostile zone HZ bordered by a mountain range MR. The hostile zone HZ is populated by enemy troops ET, who are capable of firing on the helicopter 12.

The helicopter 12 is attempting to avoid the mountain range MR, as well as the enemy troops ET, and is attempting to land on a landing site LS near a friendly military base MB.

The helicopter 12 has an on-board navigation system which embodies the various embodiments of the present invention, and which is described in detail below. The on-board navigation system illuminates a portion of the ground 14, and computes the optimal approach path 16 that will enable the helicopter 12 to land safely on the landing site LS.

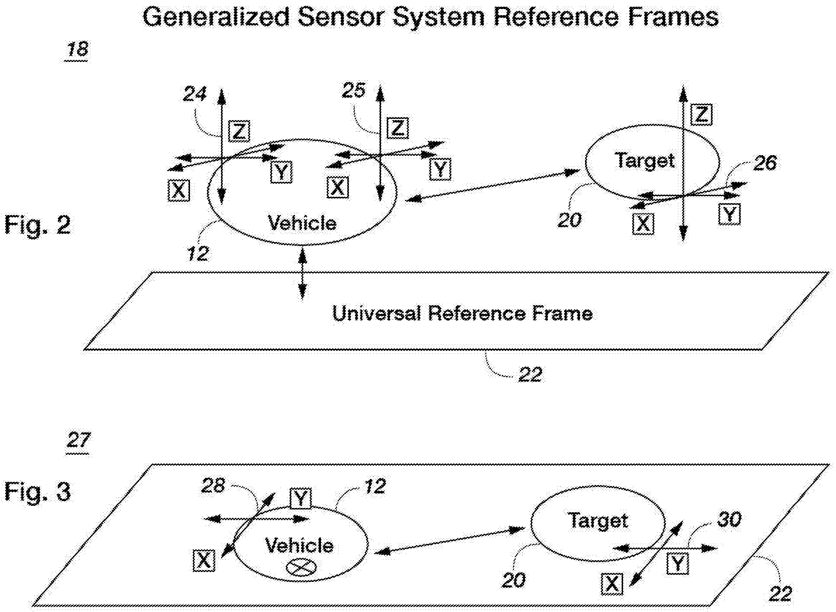

Figure 2 is a schematic view 18 of generalized sensor system reference frames for three dimensions that are employed by the present invention. Figure 2 shows both an airborne vehicle, 12, and a target 20. Figure 2 depicts a universal reference frame 22, a three-dimensional vehicle reference frame 24, a sensor reference frame 25, and a three-dimensional target reference frame 26. The universal reference frame 22 is generally defined by a plane that is associated with the terrain below the vehicle 12 and the target 20. In space, it could be defined by the features of another spacecraft.

Both the vehicle reference frame 24 and the target reference frame 26 are characterized by a Cartesian Coordinate set of three axes. The directions defined by the axes are labeled x, y and z. These directions and the rotation around each axis define six degrees of freedom.

The on-board navigation system implemented in one embodiment of the invention illuminates a portion of the universal reference frame 22, one or more targets 20 and/or other objects. This on-board navigation system utilizes a variety of sensors, which are described in detail in this Specification. Preferably, these sensors are placed exactly at the center of mass and center of inertia of the vehicle 12, so there is no difference between the sensor reference frame 25 and the vehicle reference frame 24.

Figure 3 is a similar schematic view 27 of generalized sensor system reference frames 18, but only shows the two dimensions of freedom available for a ground vehicle that are employed by the present invention. Figure 3 shows a vehicle, 12, and a target 20. Figure 3 depicts a universal reference frame 22, a planar vehicle reference frame 28, and a planar target reference frame 30. The universal reference frame 20 is generally defined by the plane that is associated with the terrain on which the vehicle 12 and the target 20 are located.

Both the vehicle reference frame 28 and the target reference frame 30 are characterized by a Cartesian Coordinate set of two axes. The directions defined by the axes are labeled x and y. These directions and rotation around the vertical or yaw define three degrees of freedom.

Embodiments of the present invention include an area range and velocity sensor system. In preferred embodiments, this may be combined with a navigation reference sensor and other components to form a navigation system. The various possible components as well as an overall navigation system are described in more detail below.

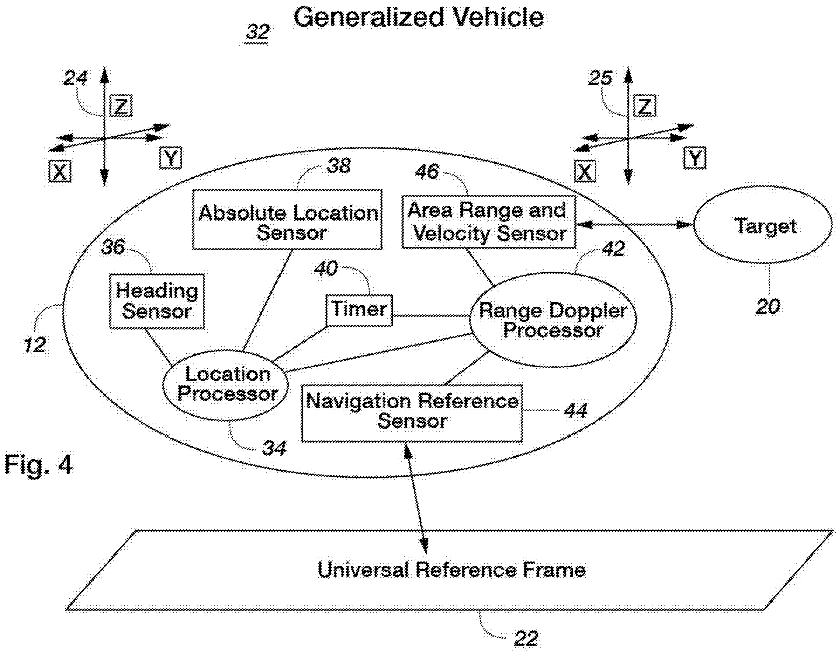

Figure 4 provides a schematic view 32 of a generalized vehicle 12. The location of the vehicle 12 is characterized by three Cartesian Coordinates, and is measured along the three axes of a vehicle reference frame 24 which in this embodiment is located at the center of mass of the vehicle. The generalized vehicle 12 carries a navigation system on-board which implements the various embodiments of the present invention. A location processor 34 is connected to a heading sensor 36, an absolute location sensor 38, and a timer 40. A range Doppler processor 42 is connected to a Navigation Reference Sensor (NRS) 44 and an Area Range & Velocity Sensor (ARVS) 46.

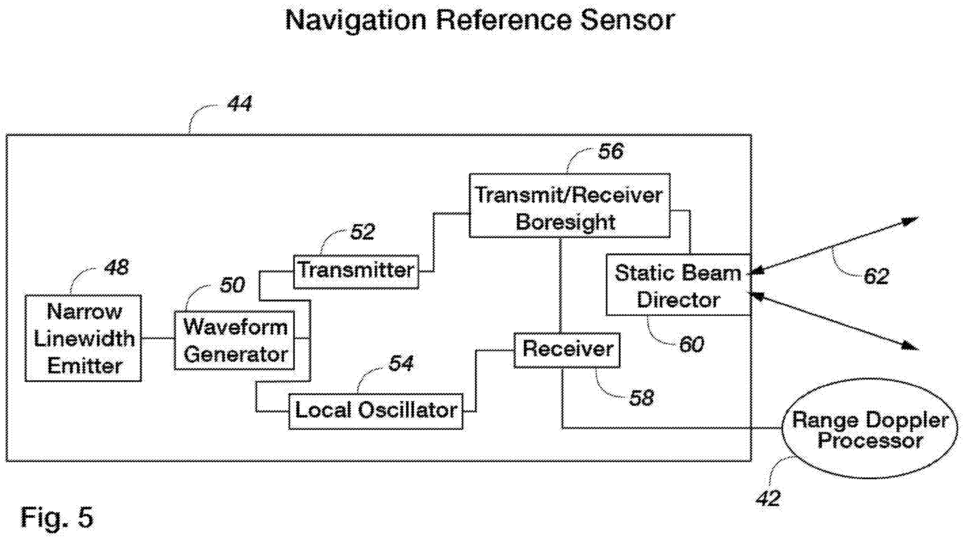

Figure 5 offers a schematic block diagram which shows the inventive details of the Navigation Reference Sensor (NRS) 44. A narrow linewidth emitter 48 is connected to a waveform generator 50, which, in turn, is coupled to both a transmitter 52 and a local oscillator 54. The transmitter 52 is connected to a transmit/receive boresight 56 and a receiver 58. The local oscillator 54 is also connected to the receiver 58. A static beam director 60 is connected to the transmit/receive boresight 56. The static beam director 60 emits and collects LIDAR beams 62.

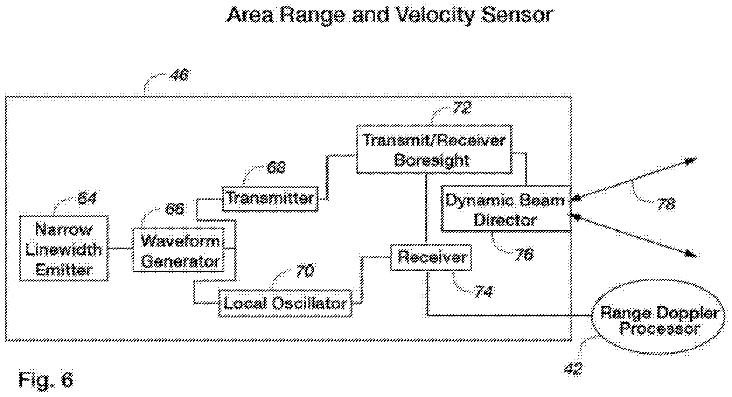

Figure 6 offers another schematic block diagram which shows the further inventive details of an Area Range & Velocity Sensor (ARVS) 46. A narrow linewidth emitter 64 is connected to a waveform generator 66, which, in turn, is coupled to both a transmitter 68 and a local oscillator 70. The transmitter 68 is connected to a transmit/receive boresight 72 and a receiver 74. The local oscillator 70 is also connected to the receiver 74. A dynamic beam director 76 is connected to the transmit/receive boresight. The dynamic beam director 76 emits and collects variable direction LIDAR beams 78.

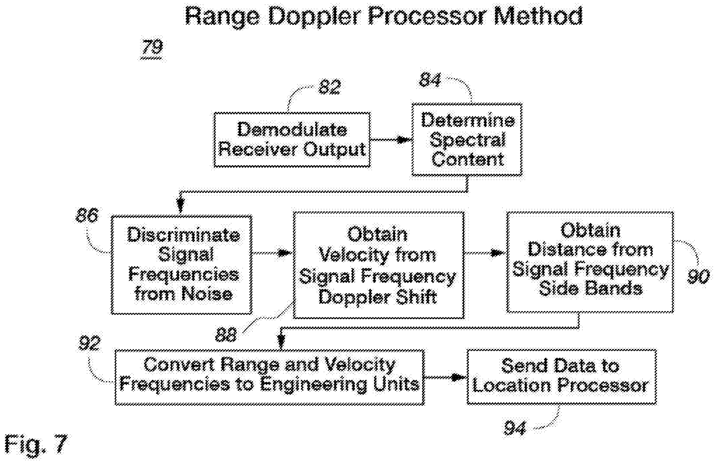

Figure 7 is a flow chart 79 that portrays method steps that are implemented by the Range Doppler Processor 42 in one embodiment of the present invention.

82 Demodulate receiver output.

84 Determine spectral content.

86 Discriminate signal frequencies from noise. These signal frequencies are the Doppler shifted frequency and the sidebands on the Doppler shift frequency.

88 Obtain velocity from signal frequency Doppler Shift. By determining the Doppler frequency itself, the speed along the beam direction of travel is calculated.

90 Obtain distance from signal frequency side bands. By determining the sideband frequencies, the range to the target or object is calculated.

92 Convert range and velocity frequencies to engineering units (or SI units).

94 Send data to Location Processor.

The NRS and ARVS operate in an almost inverted manner.

Combining the two for navigation is in my mind the inventive step that no one has thought of before because it is combines a method from measurement standard science with new lidar sensor capability into a navigation system design.

The NRS makes a measurement relative to an external reference point (usually it is the Earth as a reference but it could be a satellite in a rendezvous maneuver). The reference is external to the sensor and the sensor uses one or more beams depending on the number of degrees of freedom of the problem. A train would need one beam because it is a 1-D problem. A car needs two beams because it is contained to a 2-D surface. A flying machine needs three. To find the navigation information needed requires combining measurements from multiple beams.

The ARVS makes its measurement relative to an internal reference point, using some part itself as the reference. It measures the range and velocity of other targets relative to its own sensor configuration. Here too one or more beams are used depending on the number of degrees of freedom of the problem. Again the navigation information comes from combining measurements from these beams.

The range doppler processor processes the data from each of the NRS and ARVS with respect to its reference point.

Once data from the NRS measurements is obtained, it can be applied to the data on the objects in the environment of the vehicle through the ARS measurements. One can know where the vehicle is not only relative to say the Earth's center but also where everything around it is relative to the Earth's center (or whatever is the external reference chosen for the NRS measurement).

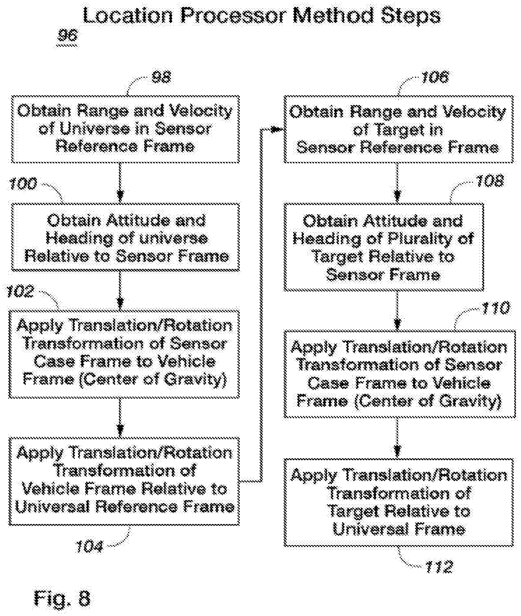

Figure 8 supplies a flow chart 96 that illustrates method steps that are implemented by the Location Processor 34 in one embodiment of the present invention. The steps shown in Figure 8 are:

    98 Obtain range and velocity of universal reference frame in sensor reference frame.

    100 Obtain attitude and heading of universal reference frame relative to sensor frame.

    102 Apply translation/rotation transformation of sensor case frame to vehicle frame (center of gravity).

    104 Apply translation/rotation transformation of vehicle frame relative to universal reference frame.

    106 Obtain range and velocity of target in sensor reference frame.

    108 Obtain attitude and heading of a target relative to sensor frame.

    110 Apply translation/rotation transformation of sensor case frame to vehicle frame (center of gravity).

    112 Apply translation/rotation transformation of target relative to universal reference frame.

The steps labeled 98, 100, 102, and 104 converts to engineering units (or SI units) the range and velocity of the vehicle 12 reference frame relative to a universal reference frame.

The steps 106, 108, and 110 convert to engineering units (or SI units) and transform coordinates for the range and velocity of the vehicle 12 reference frame relative to plurality of target reference frames.

Step 112 transforms coordinates from the target reference frames to the universal reference frame.

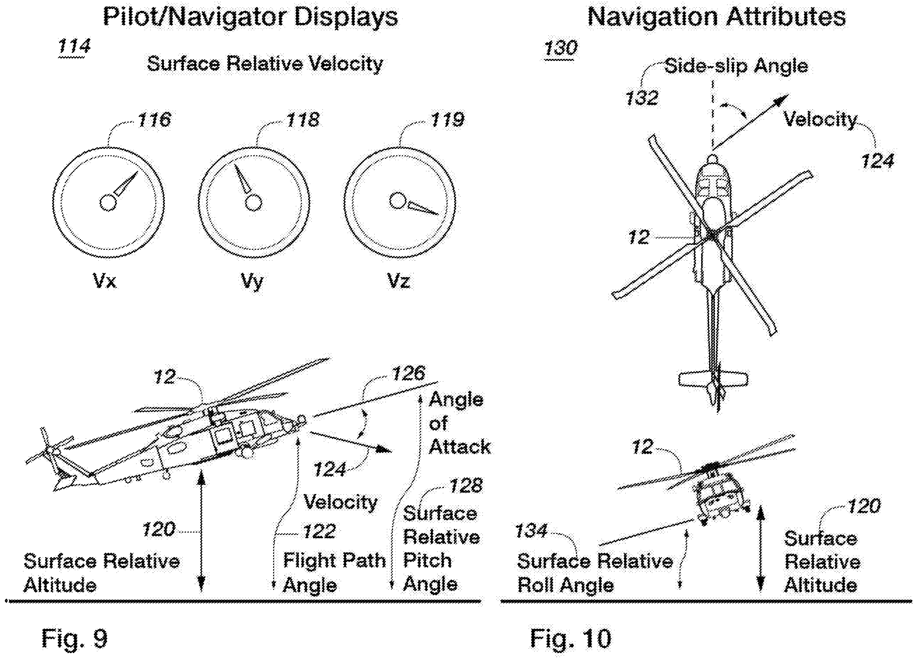

Figure 9 is an illustration 114 of one embodiment of the displays that convey navigation information to the pilot of the vehicle 12. Surface relative velocity is presented on instruments that show Vx 116, Vy 118 and Vz 119. Figure 9 also depicts other navigation information for the vehicle 12, including surface relative altitude 120, flight path angle 122, the velocity vector 124, the angle of attack 126 and the surface relative pitch angle 128.

Figure 10 is an illustration 130 that portrays navigation attributes concerning the vehicle 12, including the side-slip angle 132 and the surface relative roll angle 134.

Figure 1 shows an aerial vehicle attempting to land in a hostile zone without the benefit of GPS or any other externally supplied global navigation system signals. In order to fly safely to the landing zone and avoid obstacles and threats the helicopter uses an embodiment of the present invention outlined in Figure 4. Figures 2 and 3 show that this can be used in 3-D, aerial, and 2-D, surface, applications. Although not shown, it could be useful in a 1-D case like a train. To safely land in the landing zone and to avoid threats embodiments of the present invention utilize two doppler lidars configured to provide navigation information about the helicopter's position relative to the Earth (a universal reference) as well as its position relative to objects in its immediate environment like mountains, power lines, trees, enemy vehicles, etc. These two lidars together enable safe and reliable piloted or autonomous navigation in the absence on GNSS. The Navigation Reference Sensor (NRS) shown in Figure 4 and in more detail in Figure 5, is used to measure the helicopter's ground speed, height above the ground, and several attitude parameters (see Figure 9). This allows the vehicle to know where it is relative to an initial known position and therefore relative to the landing zone, and thus to navigate to that landing zone. In addition, the Area Range and Velocity Sensor (ARVS) shown in Figure 4 and in more detail in Figure 6, is used to measure the distance to other objects as well as the speed and direction of travel of other objects in the environment of the helicopter. Therefore, embodiments enable safe and reliable navigation through threats and to a specific landing location.

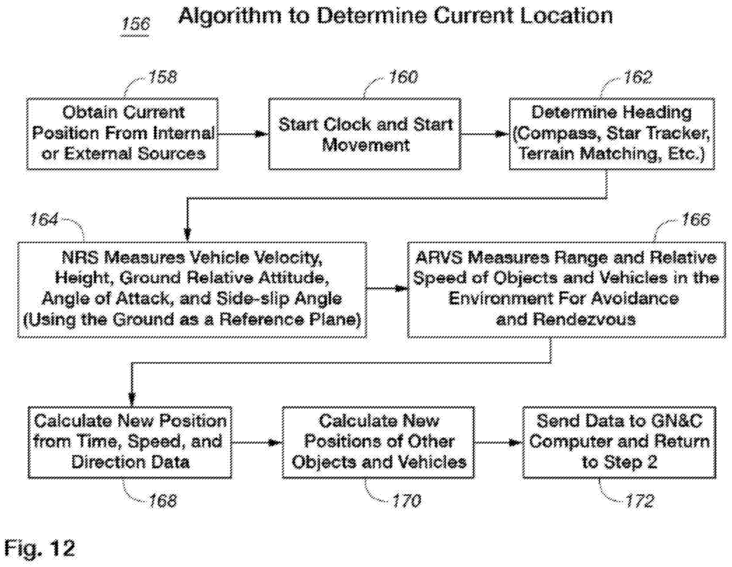

As the helicopter travels, the NRS and the ARVS emit narrow linewidth light. In this example, the NRS uses 3 or more beams that are directed toward the ground. The ARVS uses 1 or more beams directed at various objects and/or vehicles of interest. When the light hits the ground or the target it acquires information about the relative speed and distance between them and the helicopter. Some of this light, with its new information, is reflected back toward the NRS or ARVS respectively. The Doppler effect provides the key information needed in the form of a frequency shift in the returning light. The return light is collected by the beam director and transmit/receive boresight combination and travels via an optical fiber to the receiver. The receiver includes an optical detector that converts light energy into an electrical signal. The information is now contained in the electrical signal. Both the NRS and the ARVS utilize an optical detector to convert the light energy to analog electrical signals. The analog electrical signal is then converted to a digital signal with appropriate sampling to preserve the key information about the relative velocity and range to the ground or target. This digital signal is now processed using frequency estimation techniques to determine the frequency shift due to the Doppler effect which provides the relative speed and range along each of the beams. By knowing how the NRS beam directors are mounted (positioned and pointed) relative to the center of inertia of the helicopter the Range Doppler Processor (Figure 4 and 7) can combine the information from the beams to the determine the ground speed (surface relative velocity) of the vehicle, the height above the ground (surface relative altitude), the surface relative pitch angle, the angle of attack, the surface relative roll angle, and the side slip angle (See Figures 9 and 10). The ARVS uses a dynamic pointing system to point one or more beams at each target of interest in its environment. By knowing where and when these ARVS beams are pointed the Range Doppler Processor determines the range and velocity (Figure 28) for each target in the environment. These navigation parameters listed above from the NRS and ARVS are sent to the Location Processor where it combines them with the Timer (elapsed time), the Heading Sensor (compass direction) and the initial location and periodic fixes from the Absolute Location Sensor (see Figures 4, 8 and 12) data to plot a course that avoids the obstacles and threats and ends at the landing zone.

Current navigation systems utilize multiple sensors to determine a vehicle's location and to plot a course to its destination. The vast majority require GNSS signals as a primary source of location knowledge. For cases where GNSS signals are not available the options for accurate, long distance navigation accumulate large errors over time and are unable to avoid obstacles in the environment of the host vehicle. Embodiments of the present invention use the high-resolution, accurate, remotely sensed, real-time, direct velocity measurements available from the Doppler effect to provide the critical navigation information that enables on-board determination of vehicle location and determination of the relative location of the vehicle to objects in its environment. When combined with the data from other conventional sensors this new information allows safe and reliable navigation for piloted and autonomous vehicles, something that is not available today. This critical navigation information (ground speed, height above the surface, surface relative pitch and roll, angle of attack, side slip angle, range relative to other objects, and velocity of other objects) are currently not available from remotely sensed, real-time, direct measurements with the accuracy and resolution needed for safe and reliable navigation.

III. Embodiments of the Invention that may be used for GPS-Denied Environments

In one embodiment, the NRS 44 uses a coherent LIDAR system with a static beam director 62 to measure vehicle reference frame 24 speed and distance relative to the universal reference frame 22 in one or more directions, such that said speed and distance measurements can be used by the Range Doppler Processor 42 and the Location Processor 34 to determine planning, guidance, navigation and control parameters. The NRS 44 uses a narrow linewidth emitter 48 modulated by a waveform generator 50 to provide a transmitted signal to the universal reference frame 22 and a Local Oscillator 54 that goes to the receiver 58. The transmitter signal is aligned to the receiver 58 by the boresight 56 and pointed to the universal reference frame 22 by the static beam director 60.

In one embodiment of the present invention, an Area Range and Velocity Sensor (ARVS) 46 is employed to determine the location and velocity of one or more targets 20. The target 20 may be another aircraft, a building, personnel or one or more other objects.

In one embodiment of the invention, the Navigation Reference Sensor (NRS) 44 may utilize a GPS receiver, or a terrain relative navigation camera and map, or a star tracker to obtain its initial location.

The ARVS 46 uses a coherent LIDAR system with a dynamic beam director 76 to measure vehicle reference frame 24 speed and distance relative to a target reference frame 26 in one or more directions, such that the speed and distance measurements can be used by the Range Doppler Processor 42 and the Location Processor 34 to determine planning, guidance, navigation and control parameters. The ARVS 46 uses a narrow linewidth emitter 48 modulated by a waveform generator 50 to provide a transmitted signal to a target 20 and a Local Oscillator 54 that goes to the receiver 58. The transmitter signal is aligned to the receiver 74 by the boresight 72 and pointed to a target 20 by the dynamic beam director 76.

In one embodiment, the Absolute Location Sensor (ALS) 38 is used to determine an absolute location in the universal reference frame of a vehicle or platform 12 at certain intervals. The ALS 38 provides the starting fix for the location processor. Alternative methods for obtaining a starting location include using a GPS receiver, a terrain matching camera, a LIDAR system, and/or a star tracker.

In one embodiment, one or more heading sensors 36 provide the absolute orientation to the universal reference frame 22 of the vehicle 12. Heading sensors 36 indicate the direction of travel with respect to the universal reference frame 22. Alternative methods for determining the direction of travel relative to some reference frame include using a compass, a star tracker, or a terrain matching system.

One embodiment uses a timer to measure durations of travel over periods of constant speed and heading. The accuracy of the clock is driven by the need for accuracy in the location that is being determined. Errors in timing translate directly into errors in location. Each user has their own requirement on location accuracy, and, therefore, on the timer accuracy. The clock has a level of precision and accuracy that are sufficient to meet the navigation error requirements.

The user's navigation error requirements determines the clock or timer accuracy and precision. Since location is given by the product of velocity and time, location error is related linearly to clock errors for a given velocity.

The Range-Doppler Processor 42 combines the Doppler-shift information from the Doppler-shift receivers in the NRS 44 and ARVS 46.

One or more processors demodulate, filter, and convert the collected time-domain signals into frequencies from where spectral content information is retrieved. This information includes Doppler frequency shifts that are proportional to target velocity, and sideband frequencies that are proportional to the distance to a target. The Range Doppler Processor contains one or more computer processor units (CPU). One of these CPU's may accomplish the filtering task, while another demodulates the signal.

The Location Processor 34 and its algorithm 96 combine heading, range, velocity and timing and previous locations data from various sensors (guidance, navigation and control computer).

Each NRS and ARVS 46 includes a narrow linewidth emitter, which is a coherent electromagnetic radiation source with a linewidth controller such as a grating or filter. The linewidth of the source provides the accuracy limitation to the range and velocity measurements. The linewidth of the emitter refers to the spectral distribution of instantaneous frequencies centered about the primary frequency but containing smaller amplitudes on either side, thus reducing the coherence of the emitter. One embodiment of the emitter is a semiconductor laser with a gain-limited intra-cavity spectral filter.

In one embodiment according to the invention, the linewidth is 100 kHz or less:

f = c/ = 3x108 m/sec divided by 1.5x10-6 m = 200 THz;

or 1 part in 10-12. This linewidth is scalable with the frequency of the emitter.

A waveform generator manipulates the frequency, phase, or amplitude of the emitter to serve as an interrogation or communication method to the carrier wave. Frequency, phase, or amplitude modulation is performed by applying perturbations in time or space, along the emitter's path, thus adjusting the waveform. One embodiment of the modulator is an electro-optic crystal. A second embodiment of the modulator is an acousto-optic crystal. Another embodiment of the modulator is variations in current or temperature of an emitter.

The modulator creates a spectrally pure, modulated carrier frequency that has an identically (1 part in 103) linear frequency increase as a function of time, from which distance measurements are made entirely in the frequency domain.

One embodiment utilizes a very high signal-to-noise Doppler-Shift Receiver. The Doppler frequency shift of radiation reflected from moving targets, planes, or references are obtained in the frequency domain using Doppler-shift receivers. In these receivers, the signal electromagnetic field to be detected is combined with a second electromagnetic field referred to as the Local Oscillator 70. The local oscillator field is very large compared to the received field, and its shot noise dominates all other noise sources. The spectrally coherent shot noise of the local oscillator serves as a narrow bandwidth amplifier to the signal, providing very high signal-to-noise, surpassing the signal-to-noise of the more common direct detection receivers. The high degree of coherence obtained by the Narrow Linewidth Emitter 64 and Local Oscillator 70 prevent stray light or external emitter electromagnetic radiation to be detected by the Receiver 74. This unique capability enables high signal-to-noise detection even in very high traffic electromagnetic environments. Each Receiver 58 & 74 obtains a unique measurement of distance and velocity along its pointing line of sight. In this embodiment, high signal-to- noise ratio is generally greater than 10:1.

In one embodiment the sensor receivers are boresighted with the emitters.

The boresight of the electromagnetic radiation direction between the transmitter 68 and the receiver 74 allows the target-reflected transmitted radiation to be captured by the receiver 74. Every vehicle will have a different range of angular space based on its needs. It is necessary to use more than one emitter when there is more than one translational degree of freedom. A train has one translational degree of freedom. A car has two degrees, and airplane or spacecraft has three.

In one embodiment of the invention, the beam director is typically fixed in the NRS 44, but is movable in the ARVS 46. The beam director determines where the transmitted radiation is pointed, and, therefore, determines a range to a selected target 20. The beam director both transmits and collects the return radiation. There is at least one beam director in the NRS and the ARVS. There is one beam director for each beam. For an aircraft, there are at least three individual static beam directors. For a car, there are at least two. There are as many dynamic beam directors as are needed for situational awareness.

In one embodiment a vehicle 12 carries the combination of hardware and/or software that is employed to implement the invention. In one embodiment, the vehicle 12 is a helicopter, or some other aircraft. In another embodiment, the vehicle 12 may be ground-based, like an automobile or a truck. In yet another embodiment, the vehicle 12 may be a satellite in orbit. In still another alternative implementation of the invention, the combination of hardware and/or software that is used to operate the invention may be installed on a stationary platform, such as a building or utility pole.

In one embodiment the Area Range and Velocity Sensor (ARVS 46) may utilize a scanning time of flight LIDAR system, or a flash time of flight LIDAR system, or a number of cameras with photogrammetry.

In one embodiment, the Absolute Location Sensor 38 may include a GPS receiver. In another embodiment, the Absolute Location Sensor 38 may include a terrain relative navigation camera and map.

The Heading Sensor 36 may be implemented by using a compass, a star tracker, a terrain matching system or an inertial measurement unit.

The timer may comprise any oscillator with sufficient accuracy to meet navigation requirements and a counter.

The Range Doppler Processor (RDP) 42 may include any microprocessor which is able to combine the Doppler-shift information from the Doppler-shift receivers in the NRS 44 and ARVS 46. These functions include demodulation, filtering, and converting the collected time-domain signals into frequencies from where spectral content information is retrieved. This information includes Doppler frequency shifts proportional to target velocity, and distance to target.

The output of the Doppler-shift receivers (58 & 74) are demodulated. The Doppler - shift receiver or optical detector demodulates the optical waveform returning from the target 20 by mixing it with the Local Oscillator 54 (also an optical waveform with the same (called homodyne) or very nearly same (called heterodyne) frequency). When the output of the Doppler-shift receivers are demodulated, then the spectral content of the receiver output over a limited range is determined. The demodulation step moves or removes the frequencies in the spectrum that are unwanted, and allows the signal to be processed. This step narrows the range of frequencies where the next steps look for and specifically determine the signal frequencies.

In the various embodiments the Location Processor 34 may be any microprocessor that is able to combine heading, range, velocity, timing and previous location data from the various sensors (guidance, navigation and control computer).

In one embodiment the Narrow-Linewidth Emitter (NLE) is a semiconductor laser combined with an intra-cavity filter. In another embodiment, a fiber laser with an embedded grating may be employed. In other embodiments, the NLE may include a solid state laser with active cavity length control, a RADAR system, or a microwave source.

In the various embodiments the waveform generator or waveform generator may utilize an electro-optical crystal, an acousto-optical crystal or a direct laser control with temperature. The waveform generator controls the frequency content of the transmitted beam. The frequency of the laser may be changed by changing the temperature of the laser. The frequency of the laser may also be changed by changing the current through the laser.

In one embodiment the Doppler shift receiver, which is selected so that it provides a very high signal-to-noise ratio, includes an interferometer, a filter-edge detector, a homodyne detector or a heterodyne detector.

A boresight circuit that is used to implement the invention may offer fixed or active control. Any circuit which is capable of aligning the beams that are emitted by the transmitter and collected by the receiver may be employed.

In implementing the various embodiments the beam director may be designed so that it includes a telescope, a scanning mirror, microelectromechanical arrays of mirrors, phased arrays, a grating or a prism. Doppler lidar uses a constant amplitude master oscillator laser with an applied linear frequency modulated (LFM) waveform. As in conventional radar, continuous wave (CW) Lidar is very good for making Doppler measurements but is fundamentally incapable of measuring range unless the waveform is modulated in some fashion. To keep CW operation, the D-LIDAR uses frequency modulation for this purpose. Thus, the primary purpose of the LFM waveform is to obtain range measurements in addition to Doppler measurements.

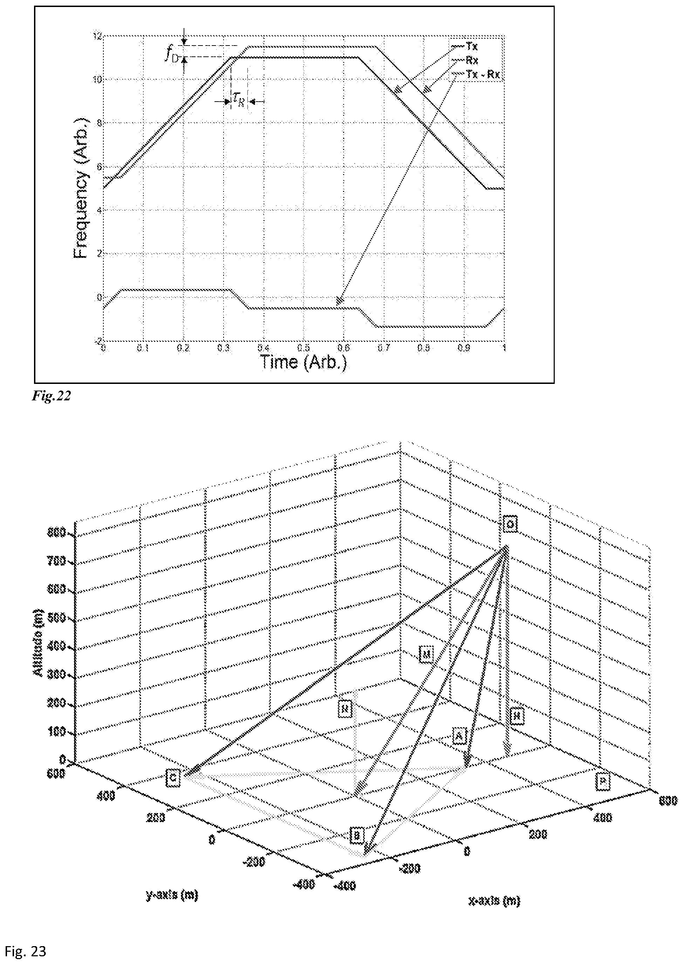

*Figure 22* depicts the frequency content of the transmitted and associated received waveform as a function of time. This example shows D-LIDAR using an FMCW waveform for precision range, attitude and velocity measurements, although other emitters and waveforms could be used. The transmitted waveform (blue trace) consists of a linearly increasing frequency having a slope of B/T, where B is the total waveform bandwidth, and T is the duration of the ramp. It is then held constant for the same duration T, and finally it is linearly decreased in frequency again for the same duration T at a slope of -B/T. The received signals (green) are delayed in time due to the round-trip time of flight of light to and from the target and shifted in frequency up or down in proportion to the target velocity by the Doppler effect. A fraction of the transmitted light serves as the reference local oscillator (LO), and this light is mixed with the incoming light from the target at the receiver detector. The resulting photo-current at the output of the detector oscillates at the difference between the transmitted and received optical frequencies. These intermediate frequencies (IF), illustrated in *Fig. 22* in red as a function of time are digitized and processed to obtain the desired distance and velocity measurements.

Of note is that the range is independent of the Doppler shift. The non-modulated portion of the waveform serves to provide a second independent measurement of the Doppler frequency which is generated directly from the relative motion of the sensor and target. The relative (or radial) velocity $v_r$ of the target with respect to a Lidar of transmitter laser wavelength λ, obeys the relationship

$$v_r = \frac{\lambda}{2\cos\theta} f_d \qquad (1)$$

where the angle $\theta$ is the total angle between the Lidar line of sight and the velocity vector. The measured Doppler frequency has a finite spectral width which ultimately determines the measurement accuracy and can be expressed by

$$\Delta f_d = -\frac{2v_r}{\lambda}\sin(\gamma)\Delta\gamma \qquad (0.2)$$

Where $\Delta f_d$ is the half power spectrum width, and $\Delta\gamma$ is the width of the beam in the $\gamma$ direction. From this equation one can readily compute the improvement to accuracy that is provided by laser radar such as the D-LIDAR.

In summary, the relative range R and the radial velocity $v_r$ (1) between the D-LIDAR and the target is obtained by identifying three signal frequencies: $f_d, f_{IF}^+, f_{IF}^-$, which are separable in time. The D-LIDAR measures these three frequencies along the LOS of each of its telescopes.

For the special case when at least three independent LOS speed measurements are available simultaneously, a relative velocity vector is determined. This velocity vector provides complete knowledge of the relative speed and direction of motion between the sensor and the target.

From the sensor reference frame the target (ground or landing strip) is moving at a velocity having magnitude $|\vec{V}|$ and a direction $|\vec{V}| = v_x\hat{x}+v_y\hat{y}+v_z\hat{z}$ then the measured LOS (radial) velocities of that target are $M_A$, $M_B$, and $M_C$ for channels A, B, and C respectively, and are obtained from the dot-products of the D-LIDAR beam-pointing unit vectors (know ad priori) and the velocity vector:

$$\begin{bmatrix} M_A \\ M_B \\ M_C \end{bmatrix} = [S] \cdot \begin{bmatrix} v_x \\ v_y \\ v_z \end{bmatrix} \qquad (0.3)$$

Equation (0.3) provides three equations that include the measured LOS velocities as well as the three unknown velocity components $v_x$, $v_y$, and $v_z$, that describe the velocity vector of interest, and can therefore be solved simultaneously to high accuracy.

Likewise, for the special case where at least three independent LOS distance measurements are available simultaneously, the geometry reduces in such a way that the measured altitude is not a function of attitude (and thus, attitude uncertainty), and surface relative attitude can be estimated.

Altitude Measurement Computations

Computation of vehicle height above the ground level (AGL) is a straight forward exercise in vector analysis. Figure 23 is a vector representation of the D-LIDAR. In this figure, the attitude of the sensor reference frame relative to the ground reference frame is arbitrary. Vectors OA, OB, and OC are known vectors corresponding to three D-LIDAR laser beams designated as channels A, B, and C, respectively, of magnitude equal to the measured range by each beam and direction defined by the sensor design. O is a point corresponding to the origin of the D-LIDAR reference frame and vectors AB, BC and CA form the ground plane P. The magnitude and direction of these vectors are obtained from the known vectors OA, OB, and OC:

$$AB = OB - OA$$
$$BC = OC - OB$$
$$CA = OA - OC \qquad (0.4)$$

N is defined as the normal unit vector of the plane P given by the cross-product of any two vectors in P:

$$N = \frac{BC \times AB}{|N|} \qquad (0.5)$$

M is defined as a median vector originating at O and parallel to the D-LIDAR reference frame z-axis. The magnitude of M is $R_M$. Vector M is defined as

$$M = R_M \cdot \begin{bmatrix} 0 \\ 0 \\ -1 \end{bmatrix} \begin{bmatrix} \hat{x} \\ \hat{y} \\ \hat{z} \end{bmatrix} = -R_M\hat{z} \qquad (0.6)$$

The median vector amplitude $R_M$ is found by noting that the vector difference (M-OA) is a vector which lies on the ground plane P, and therefore can be solved from:

$$N \cdot (M - OA) = N \cdot (-R_M\hat{z} - OA) = 0 \qquad (0.7)$$

Once $R_M$ is known, and recognizing that the altitude H is parallel to N, the vehicle height above the plane P is calculated from

$$H = R_M \cdot \left(\frac{N \cdot M}{|N| \cdot |M|}\right) \qquad (0.8)$$

Note that this computation of height does not require any additional information from other sensors (including IMUs). If all three beams intersect the ground plane, the altitude measurement is the shortest distance to the ground plane. In contrast, when measuring height using a laser range-finder, the altitude is obtained by the range measurement and the vehicle's attitude as measured by an IMU.

Ground Plane Relative Attitude

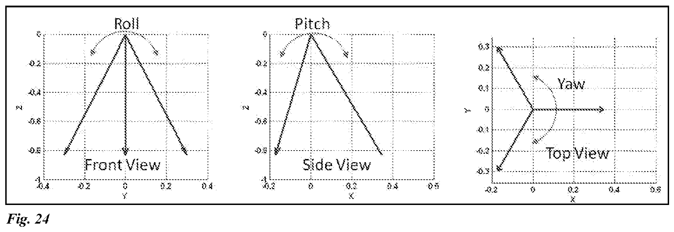

Given the geometry of the telescope pointing within the sensor's reference frame as shown in Fig. 23, the ground reference plane is known according to its normal unit vector N, the attitude of the sensor's reference frame relative to that ground reference plane can be obtained. Vehicle attitude refers to roll ($\alpha$), which is rotation of the vehicle along the x - axis, pitch ($\beta$), rotation along the y - axis and yaw ($\gamma$), rotation along the z - axis as illustrated in Figure 24. Description of the sensor reference frame can be made using one of the 24 angle set conventions that best simplifies the solutions to roll, pitch, and yaw for this system.

Computation of heading relative to the direction of motion can be obtained after applying the roll and pitch rotation to the velocity vector. After correction in roll and pitch, side slip angle (SSA)) is given by

$$\gamma = \tan^{-1}\left(\frac{V_y}{V_x}\right)$$

$$(0.9)$$

Where $V_x$ and $V_y$ correspond to the rotated components of the velocity vector. For the assumption that the platform and sensor x-axes are identical, a similar parameter can be given for angle of approach (AoA) which is defined as the angle made by the x-axis of the platform and the direction of travel:

$$AoA = \tan^{-1}\left(\frac{V_z}{V_x}\right)$$

(0.10)V. Detailed Descriptions Alternative Embodiments of the Invention that may be used in Combination with Conventional and/or Autonomous Vehicles

A. Figures 13-21

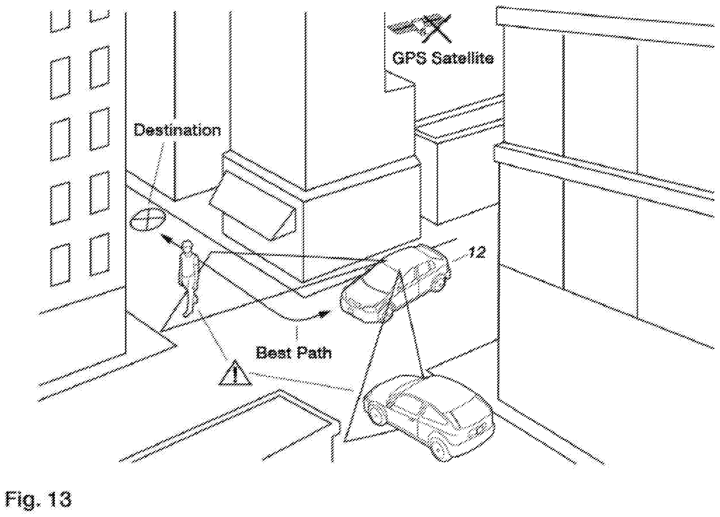

Figure 13 shows a car navigating through a large city where GPS signals are not available. The Reference Sensor enhances this navigation. Figure 13 also shows the Area Sensor providing local navigation information about hazards by probing other vehicles or objects with beams moving essentially horizontal to the ground.

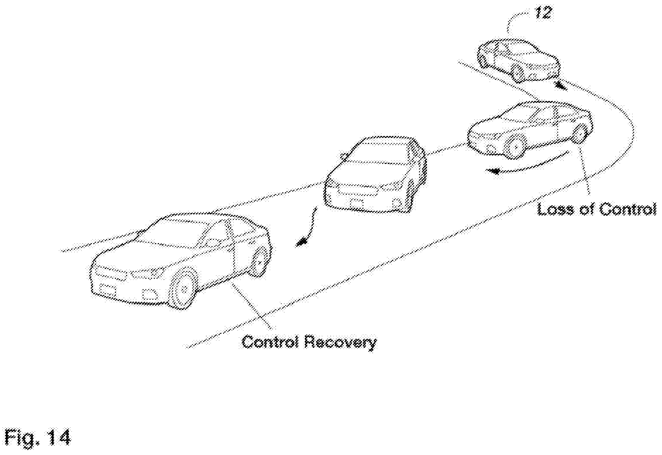

Figure 14 shows a car losing control on a turn and then recovering. This control recovery possible because our system of Reference and Area Sensors along with other sensors already available like an IMU, cameras, etc. allow the car to keep up with where it is in rotation and translation and therefore use its control mechanisms to recover safely.

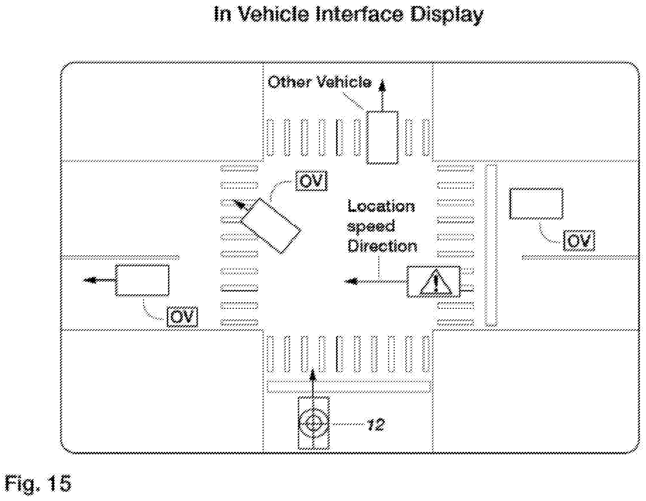

Figure 15 shows a display that may be used in the vehicle shown in Figure 13.

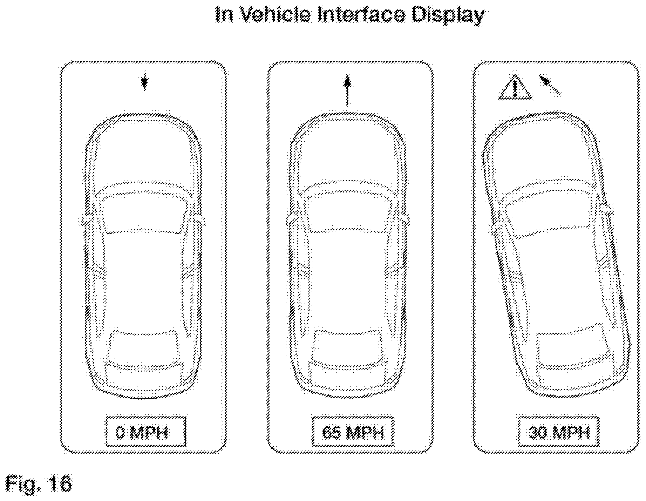

Figure 16 shows another display that may be employed in the vehicle in Figure 14.

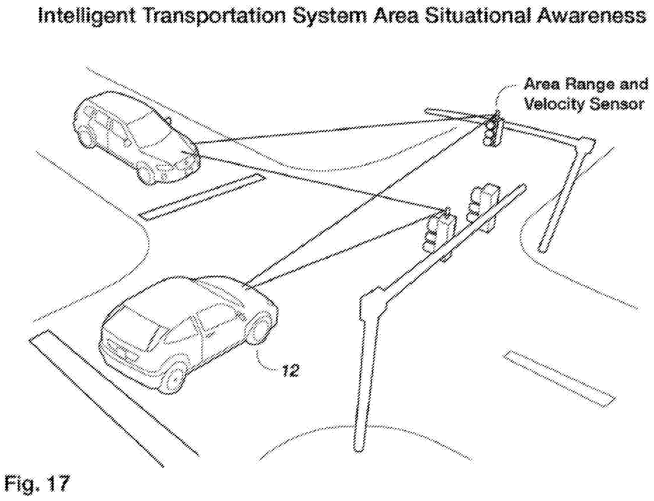

Figure 17 depicts the measurement of the location, speed and direction of vehicles in the vicinity of an intersection. Autonomous cars have the ability to receive data like this from external sources to enable better traffic flow management.

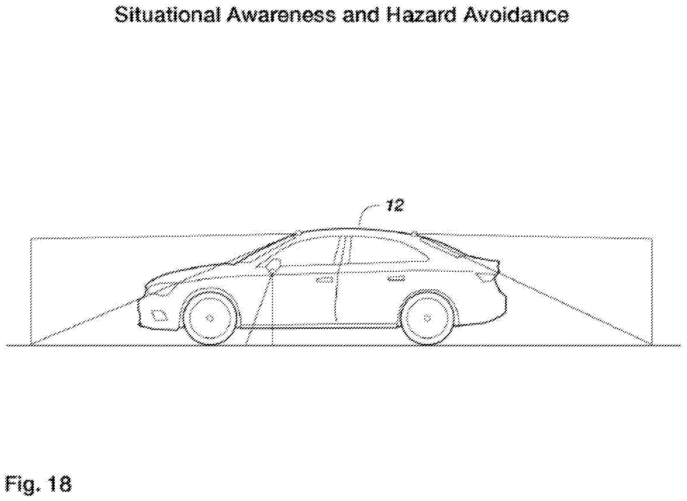

Figure 18 shows the field of view of the Area Sensors mounted at the top of the front and rear windshields from a side view.

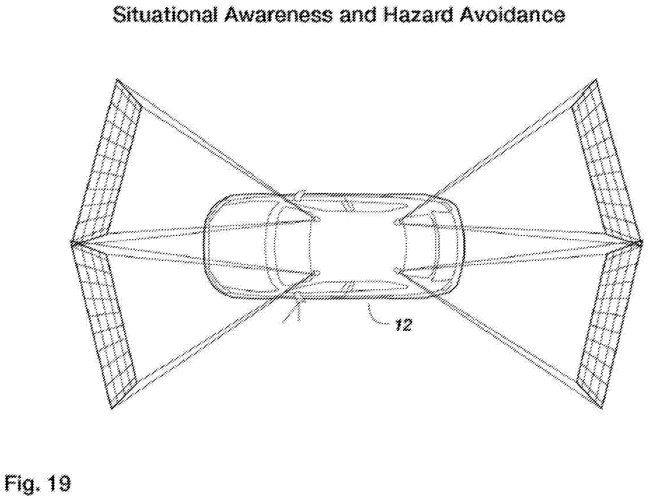

Figure 19 shows the field of view of the Area Sensors mounted at the top of the front and rear windshields from a top view.

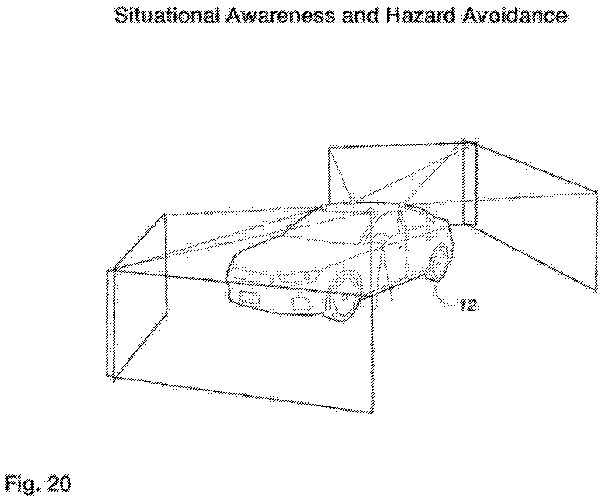

Figure 20 is a view of a vehicle combined with situation awareness and hazard avoidance.

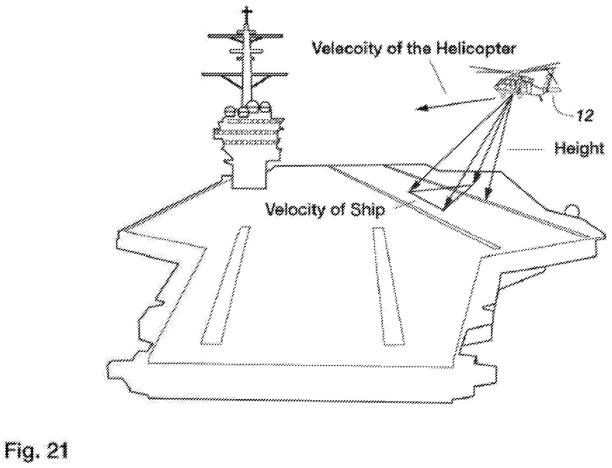

Figure 21 shows the Reference Sensor used to land on a moving platform like a ship deck. It allows the control system to make a soft landing by tracking the distance and speed of the deck with respect to the helicopter.

B. Overview of Alternative Embodiments

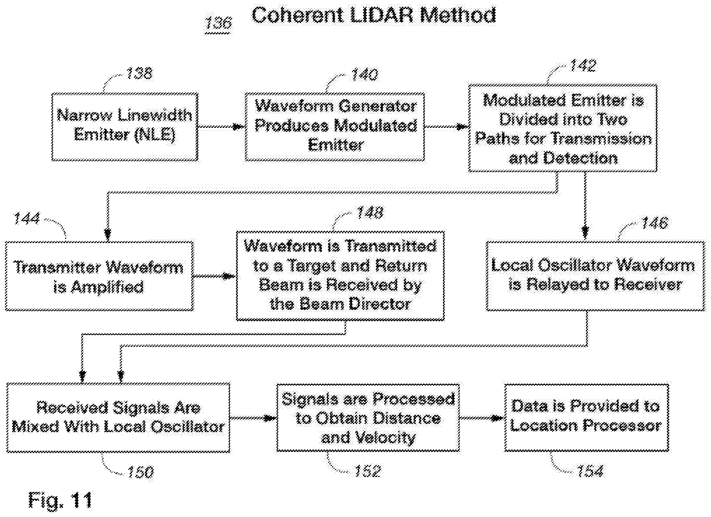

Figures 13-21 generally provide schematic illustrations of applications of alternative embodiments. Figures 13-20 pertain to vehicles 12 which generally travel, translate or otherwise move on, near or under the ground, while Figure 21 pertains to the interaction of water-borne and airborne vehicles 12. All of the vehicles 12 shown in Figures 13-21 and described in Section II of the Detailed Description, such as cars, buses, trucks, trains, subways or other near-surface conveyances may utilize some combination of elements of the Invention shown in Figures 1-12 and described in Sections I, II, III and IV of the Detailed Description.

All of the vehicles 12 shown in Figures 13-21 and described in Section V of the Detailed Description provide specific enhanced navigation benefits to users of either conventional and/or driverless vehicles that are obtained only through the implementation of and combination with the elements of the Invention shown in Figures 1-12 and described in Sections I, II, III and IV of the Detailed Description.

In the case of ground vehicles such as automobiles and trucks, various implementations and/or variations of the navigation system hardware shown in Figures 1-12 may be installed near an engine, within a passenger compartment, in cargo storage areas, or in some other suitable space. This navigation system hardware is connected to sensors, emitters, antennas or other transmit and/or receive elements by conductive cables, fibers, wireless links, or other suitable data pathways. Some or all of these sensors, emitters, antennas or other transmit and/or receive elements may be mounted on, embedded in or otherwise affixed, coupled or attached to appropriate surfaces or structures of a vehicle, or on nearby surfaces and/or structures, such as roads, bridges, highways, freeways, embankments, berms, ramps, toll booths, walkways, drainage culverts, fences, walls, tracks, tunnels, stations, platforms, signage, traffic signals, motorcycles, bicycles, pedestrians, pets, animals, parking spaces, fire hydrants, standpipes, buildings or other facilities, appurtenances, appliances, equipment, cables, hazards, or objects.

It will be appreciated that other vehicular systems (autonomous, driver assist or otherwise) may be used in combination with embodiments of the present invention including forward collision warning, auto-braking, lane departure warning, lane departure prevention, blind spot detection, adaptive headlights, and automated driving systems that use advanced control technology to cope with all driving situations right up to the vehicle's dynamic limits.

It will be appreciated that in addition to the use of the combined signals from the ARVS and NRS for location and navigation determination, the two respective systems also provide benefits to the other. The ARVS improves performance of the NRS because 1) it can identify known objects that provide better information about absolute location; 2) it also improves navigation with NRS alone because it can identify and help avoid unknown objects and therefore help determine the optimal path.

The NRS improves the ARVS because with it 1) the ARVS can determine the absolute position of objects and hazards and therefore contribute to mapping which can be used at a later time for example on the return trip or by another vehicle; 2) it also provides context to the ARVS to allow smarter environmental scans. A smarter environmental scan could be faster, cheaper, smaller, better, lower power, more accurate - smarter in the sense that it accomplishes the goal of the sensor system in a way that is needed by the designer. One of the key problems today with autonomous vehicles is the large amount of information that needs to be processed (that costs $, power, weight). A smarter scan could reduce the amount of processing needed to be done for safe and reliable operation.

## INDUSTRIAL APPLICABILITY

The *Navigation System for GPS Denied Environments* will provide an apparatus and methods for obtaining position, orientation, location, altitude, velocity, acceleration or other geodetic, calibration or measurement information in GPS denied environments. The present invention will provide unique benefits for military users, as well as to persons in the aviation and ground transportation industries.

## LIST OF REFERENCE CHARACTERS

| | |
|---|---|
| ET | Enemy troops |
| HZ | Hostile zone |
| LS | Landing site |
| MB | Military base |
| MR | Mountain range |
| S | Satellite |
| 10 | Navigation System in a GPS Denied Environment |
| 12 | Vehicle |
| 14 | Portion of ground |
| 16 | Flight path |
| 18 | Generalized sensor system reference frame: three dimensions |
| 20 | Target |
| 22 | Universal reference frame |
| 24 | Vehicle reference frame in three dimensions |
| 26 | Target reference frame in three dimensions |
| 27 | Generalized sensor system reference frame: two dimensions |
| 28 | Vehicle reference frame in two dimensions |
| 30 | Target reference frame in two dimensions |
| 32 | Schematic diagram of a generalize vehicle |
| 34 | Location Processor |
| 36 | Heading Sensor |
| 38 | Absolute Location Sensor |
| 40 | Timer |
| 42 | Range Doppler Processor |
| 44 | Navigation Reference Sensor |
| 46 | Area Range and Velocity Sensor |
| 48 | Narrow Linewidth Emitter |
| 50 | Waveform Generator |
| 52 | Transmitter |
| 54 | Local Oscillator |
| 56 | Transmit/Receive Boresight |
| 58 | Receiver |
| 60 | Static Beam Director |
| 62 | Beams from Static Beam Director |
| 64 | Narrow Linewidth Emitter |
| 66 | Waveform Generator |
| 68 | Transmitter |
| 70 | Local Oscillator |
| 72 | Transmit/Receive Boresight |
| 74 | Receiver |
| 76 | Dynamic Beam Director |
| 78 | Beams from Dynamic Beam Director |
| 79 | Flow chart for Range Doppler Processor |
| 82 | Demodulate receiver output |
| 84 | Determine spectral content |
| 86 | Discriminate signal frequencies from noise |
| 88 | Obtain velocity from signal frequency |
| 90 | Obtain distance from signal frequency |
| 92 | Convert range and velocity frequencies to engineering units |
| 94 | Send data to Location Processor |
| 96 | Flow chart for Location Processor |

98 Obtain range and velocity of universal reference frame

100 Obtain attitude and heading of universal reference frame relative to sensor frame

102 Apply translation/rotation transformation of sensor case frame to vehicle frame (center of gravity)

104 Apply translation/rotation transformation of vehicle frame relative to universal reference frame

106 Obtain range and velocity of target in vehicle reference frame

108 Obtain attitude and heading of a target relative to vehicle reference frame

110 Apply translation/rotation transformation of sensor case frame to vehicle frame (center of gravity)

112 Apply translation/rotation transformation of target relative to universal reference frame

114 Pilot/navigator displays

116 Surface relative velocity: Vx

118 Surface relative velocity: Vy

119 Surface relative velocity: Vz

120 Surface relative altitude

122 Flight path angle

124 Velocity

126 Angle of attack

128 Surface relative pitch angle

130 Navigation attributes

132 Side-slip angle

134 Surface relative roll angle

136 Coherent LIDAR Method

138 Narrow linewidth emitter

140 Waveform generator produces modulated emitter output

142 Modulated emitter output divided into two paths

144 Transmitter waveform is amplified

146 Local oscillator waveform is relayed to receiver

148 Waveform transmitted to target and return beam is received by the beam director

150 Received signals are mixed with local oscillator

152 Signals are processed to obtain distance and velocity

154 Data provided to location processor

156 Algorithm to determine current location

158 Obtain current position from internal or external sources

160 Start clock and movement of vehicle

162 Determine heading

164 NRS measures vehicle velocity

166 ARVS measures range and relative speed of objects

168 Calculate new position of vehicle

170 Calculate new position of other objects

172 Send data to GN&C computer

82 Demodulate receiver output

84 Determine spectral content

86 Discriminate signal frequencies from noise

88 Obtain velocity from signal frequency

90 Obtain distance from signal frequency

92 Convert range and velocity frequencies to engineering units

94 Send data to Location Processor

96 Flow chart for Location Processor

98 Obtain range and velocity of universal reference frame

100 Obtain attitude and heading of universal reference frame relative to sensor frame

102 Apply translation/rotation transformation of sensor case frame to vehicle frame (center of gravity)

104 Apply translation/rotation transformation of vehicle frame relative to universal reference frame

106 Obtain range and velocity of target in vehicle reference frame

108 Obtain attitude and heading of a target relative to vehicle reference frame

110 Apply translation/rotation transformation of sensor case frame to vehicle frame (center of gravity)

112 Apply translation/rotation transformation of target relative to universal reference frame

114 Pilot/navigator displays

116 Surface relative velocity: Vx

118 Surface relative velocity: Vy

119 Surface relative velocity: Vz

120 Surface relative altitude

122 Flight path angle

124 Velocity

126 Angle of attack

128 Surface relative pitch angle

130 Navigation attributes

132 Side-slip angle

134 Surface relative roll angle

136 Coherent LIDAR Method

138 Narrow linewidth emitter

140 Waveform generator produces modulated emitter output

142 Modulated emitter output divided into two paths

144 Transmitter waveform is amplified

146 Local oscillator waveform is relayed to receiver

148 Waveform transmitted to target and return beam is received by the beam director

150 Received signals are mixed with local oscillator

152 Signals are processed to obtain distance and velocity

154 Data provided to location processor

156 Algorithm to determine current location

158 Obtain current position from internal or external sources

160 Start clock and movement of vehicle

162 Determine heading

164 NRS measures vehicle velocity

166 ARVS measures range and relative speed of objects

168 Calculate new position of vehicle

170 Calculate new position of other objects

172 Send data to GN&C computer

**Claims**

1. An apparatus (10) for providing navigation data for a vehicle (12), comprising:

   a narrow linewidth emitter (64) having a linewidth of 100kHz or less;
   a dynamic beam director (76);
   said narrow linewidth emitter (64) being configured to emit a modulated continuous wave signal in a direction directed by said dynamic beam director so as to point at a target of interest;
   an area range and velocity sensor (46) configured to receive a reflection of the emitted signal;
   the area range and velocity sensor (46) being configured to measure the frequency of the reflection returning from the target to determine range and velocity of said vehicle relative to said target;
   a further narrow linewidth emitter (48) having a linewidth of 100kHz or less;
   a static beam director (60);
   said further narrow linewidth emitter (48) being configured to emit a second continuous wave signal through said static beam director toward a universal reference plane; and,
   a navigation reference sensor (44) configured to receive a reflection of the second emitted signal and determine velocity of said vehicle relative to said universal reference plane.

2. The apparatus (10) of claim 1, wherein the second continuous wave signal is non-modulated.

3. The apparatus (10) of claim 1 or 2, comprising a plurality of further narrow beam linewidth emitters, the number of further narrow beam linewidth emitters being dependent on degrees of freedom of motion of the vehicle.

4. The apparatus (10) of claim 3, wherein at least one of the further narrow beam emitters is configured to emit a modulated continuous wave signal through a static beam director (60) towards the universal reference plane, the navigation reference sensor (44) being configured to receive a reflection of the modulated signal and determine distance of said vehicle relative to said universal reference plane.

5. The apparatus (10) of any preceding claim, wherein the or each sensor is configured to measure frequency shift from a doppler effect in the reflected signal.

6. The apparatus (10) of any preceding claim, wherein the area range velocity sensor (46) comprises a coherent receiver.

7. The apparatus (10) of any preceding claim, wherein the or each sensor is boresighted with the emitter.

8. The apparatus (10) of any preceding claim, wherein the or each emitter is a laser.

9. The apparatus (10) of any preceding claim, wherein the or each emitter is a coherent lidar system.

10. The apparatus (10) of any preceding claim when dependent on claim 1, further comprising a location processor (34) configured to receive velocity data from the navigation reference sensor (44), range and velocity data on the target from the area range and velocity sensor (46), timing data from a clock and data on an initial location of the vehicle, the location processor being configured to compute navigation data to a destination in dependence on the received data.

11. A method for providing navigation data for a vehicle (12), the vehicle (12) having a vehicle reference plane, the method comprising:

    providing a narrow linewidth emitter (64) having a linewidth of 100kHz or less, a dynamic beam director (76) and a receiver (74) in said vehicle, emitting, by said narrow linewidth emitter (64), a modulated continuous wave signal through said dynamic beam director (76) at a target of interest;
    receiving a reflection of the emitted signal by the receiver (74), the receiver (74) having a sensor reference plane having a known relationship to the vehicle reference plane;
    measuring the frequency of the reflection returning from the target received at the receiver and determining range and velocity of said vehicle relative to said target in dependence on the sensor reference plane and vehicle reference plane;
    providing a further narrow linewidth emitter (48) having a linewidth of 100kHz or less, a static beam director (60) and a further receiver (58) in said vehicle;
    emitting, by said further narrow linewidth emitter (48) a non-modulated continuous wave signal through said static beam director toward a universal reference plane;
    receiving, at the further receiver (58), a reflection of the second emitted signal; and,
    determining velocity of said vehicle relative to said universal reference plane.

12. The method of claim 11, further comprising:
    providing, in said vehicle (12), a plurality of further narrow beam linewidth emitters, the number of further narrow beam linewidth emitters being dependent on degrees of freedom of motion of the vehicle.

**13.** The method of claim 11, further comprising:

> modulating the continuous wave signal of at least one of the further emitters and directing the modulated signal through a static beam director towards the universal reference plane; and, receiving a reflection of the modulated signal at the or a further receiver and determining distance of said vehicle relative to said universal reference plane.

**Patentansprüche**

**1.** Vorrichtung (10) zum Bereitstellen von Navigationsdaten für ein Fahrzeug (12), aufweisend:

> einen Emitter (64) mit schmaler Linienbreite, der eine Linienbreite von 100kHz oder weniger hat; eine dynamische Strahllenkeinrichtung (76); wobei der Emitter (64) mit schmaler Linienbreite konfiguriert ist, um ein moduliertes kontinuierliches Wellensignal in eine Richtung zu emittieren, die durch die dynamische Strahllenkeinrichtung gelenkt ist, auf Ziel des Interesses zu weisen; einen Bereichsentfernungs- und Geschwindigkeitssensor (46), der konfiguriert ist, um eine Reflexion des emittierten Signals zu empfangen; wobei der Bereichsentfernungs- und Geschwindigkeitssensor (46) konfiguriert ist, um die Frequenz der Reflexion zu messen, die von dem Ziel zurückkehrt, um die Entfernung und Geschwindigkeit des Fahrzeugs relativ zum Ziel zu bestimmen; einen weiteren Emitter (48) mit schmaler Linienbreite, der eine Linienbreite von 100kHz oder weniger hat; eine statische Strahllenkeinrichtung (60); wobei der weitere Emitter (48) mit schmaler Linienbreite konfiguriert ist, um, durch die statische Strahllenkeinrichtung, ein zweites kontinuierliches Wellensignal in Richtung einer Universal-Referenzebene zu emittieren; und einen Navigations-Referenzsensor (44), der konfiguriert ist, um eine Reflexion des zweiten emittierten Signals zu empfangen und die Geschwindigkeit des Fahrzeugs relativ zu der Universal-Referenzebnen zu bestimmen.

**2.** Vorrichtung (10) nach Anspruch 1, wobei das zweite kontinuierliche Wellensignal nicht-moduliert ist.

**3.** Vorrichtung (10) nach Anspruch 1 oder 2, aufweisend eine Mehrzahl von weiteren Emittern mit schmaler Linienbreite, wobei die Anzahl der weiteren Emitter mit schmaler Linienbreite abhängig ist von den Freiheitsgraden der Bewegung des Fahrzeugs.

**4.** Vorrichtung (10) nach Anspruch 3, wobei mindestens einer der weiteren Emitter mit schmaler Linienbreite konfiguriert ist um ein moduliertes kontinuierliches Wellensignal durch eine statische Strahllenkeinrichtung (60) in Richtung der Universal-Referenzebene zu emittieren, wobei der Navigations-Referenzsensor (44), konfiguriert ist, um eine Reflexion des modulierten Signals zu empfangen und den Abstand des Fahrzeugs relativ zu der Universal-Referenzebnen zu bestimmen.

**5.** Vorrichtung (10) nach einem der vorhergehenden Ansprüche, wobei der oder jeder Sensor konfiguriert ist, um die Frequenzverschiebung von einem Dopplereffekt in dem reflektierten Signal zu messen.

**6.** Vorrichtung (10) nach einem der vorhergehenden Ansprüche, wobei der Bereichsentfernungs- und Geschwindigkeitssensor (46) einen kohärenten Empfänger aufweist.

**7.** Vorrichtung (10) nach einem der vorhergehenden Ansprüche, wobei der oder jeder Sensor mit dem Emitter justiert ist.

**8.** Vorrichtung (10) nach einem der vorhergehenden Ansprüche, wobei der oder jeder Emitter ein Laser ist.

**9.** Vorrichtung (10) nach einem der vorhergehenden Ansprüche, wobei der oder jeder Emitter ein kohärentes LIDAR-System ist.

**10.** Vorrichtung (10) nach einem der vorherigen Ansprüche, wenn dieser abhängig von Anspruch 1 ist, weiterhin aufweisend einen Ortungsprozessor (34), der konfiguriert ist, um Geschwindigkeitsdaten von dem Navigations-Referenzsensor (44), Entfernungs- und Geschwindigkeitsdaten zum Ziel von dem Bereichsentfernungs- und Geschwindigkeitssensor (46), zeitliche Daten von einer Uhr und Daten zu einem anfänglichen Ort des Fahrzeugs zu empfangen, wobei der Ortungsprozessor konfiguriert ist, um Navigationsdaten zu einem Ziel in Abhängigkeit von den empfangenen Daten zu berechnen.

**11.** Verfahren zum Bereitstellen von Navigationsdaten für ein Fahrzeug (12), wobei das Fahrzeug (12) eine Fahrzeug-Referenzebene aufweist, wobei das Verfahren aufweist:

> Bereitstellen eines Emitters (64) mit schmaler Linienbreite, der eine Linienbreite von 100kHz oder weniger hat, einer dynamische Strahllenkeinrichtung (76) und eines Empfänger (74) in dem Fahrzeug,

Emittieren, durch den Emitter (64) mit schmaler Linienbreite, eines modulierten kontinuierlichen Wellensignals durch die dynamische Strahllenkeinrichtung (76) auf ein Ziel des Interesses; Empfangen einer Reflexion des emittierten Signals durch den Empfänger (74), wobei der Empfänger (74) eine Sensor-Referenzebene hat, welche eine bekannte Beziehung zu der Fahrzeug-Referenzebene hat;

Messen der Frequenz der Reflexion, die von dem Ziel zurückkehrt und am Empfänger empfangen wird, und Bestimmen der Entfernung und Geschwindigkeit des Fahrzeugs relativ zum Ziel in Abhängigkeit von der Sensor-Referenzebene und der Fahrzeug-Referenzebene;

Bereitstellen eines weiteren Emitters (48) mit schmaler Linienbreite, der eine Linienbreite von 100kHz oder weniger hat, einer statischen Strahllenkeinrichtung (60) und eines weiteren Empfängers (58) in dem Fahrzeug;

Emittieren, durch den weiteren Emitter (48) mit schmaler Linienbreite, eines nichtmodulierten kontinuierlichen Wellensignals durch die statische Strahllenkeinrichtung in Richtung der Universal-Referenzebene;

Empfangen, an dem weiteren Empfänger (58), einer Reflexion des zweiten emittierten Signals; und,

Bestimmen der Geschwindigkeit des Fahrzeugs relativ zu der Universal-Referenzebene.

**12.** Verfahren nach Anspruch 11, weiterhin aufweisend: Bereitstellen, in dem Fahrzeug (12), eine Mehrzahl von weiteren Emittern mit schmaler Linienbreite, wobei die Anzahl der weiteren Emitter mit schmaler Linienbreite abhängig ist von den Freiheitsgraden der Bewegung des Fahrzeugs.

**13.** Verfahren nach Anspruch 11, weiterhin aufweisend:

Modulieren des kontinuierlichen Wellensignals von mindesten einem der weiteren Emitter und Richten des modulierten Signals durch eine statische Strahllenkeinrichtung in Richtung der Universal-Referenzebene; und
Empfangen einer Reflexion des modulierten Signals an dem oder einem weiteren Empfänger und Bestimmen des Abstands des Fahrzeugs relativ zu der Universal-Referenzebene.

**Revendications**

**1.** - Appareil (10) pour fournir des données de navigation pour un véhicule (12), comprenant :

un émetteur à largeur de raie étroite (64) ayant une largeur de raie de 100 kHz ou moins ; un directeur de faisceau dynamique (76) ; ledit émetteur à largeur de raie étroite (64) étant configuré pour émettre un signal d'onde continu modulé, dans une direction dirigée par ledit directeur de faisceau dynamique de façon à pointer vers une cible d'intérêt ;

un capteur de portée et de vitesse (46) configuré pour recevoir une réflexion du signal émis ; le capteur de portée et de vitesse (46) étant configuré pour mesurer la fréquence de la réflexion renvoyée par la cible pour déterminer la portée et la vitesse dudit véhicule par rapport à ladite cible ;

un émetteur à largeur de raie étroite supplémentaire (48) ayant une largeur de raie de 100 kHz ou moins ;

un directeur de faisceau statique (60) ;
ledit émetteur à largeur de raie étroite supplémentaire (48) étant configuré pour émettre un second signal d'onde continu à travers ledit directeur de faisceau statique vers un plan de référence universel ; et

un capteur de référence de navigation (44) configuré pour recevoir une réflexion du second signal émis et déterminer la vitesse dudit véhicule par rapport audit plan de référence universel.

**2.** - Appareil (10) selon la revendication 1, dans lequel le second signal d'onde continu est non modulé.

**3.** - Appareil (10) selon la revendication 1 ou 2, comprenant une pluralité d'émetteurs à largeur de raie à faisceau étroit supplémentaires, le nombre d'émetteurs à largeur de raie à faisceau étroit supplémentaires dépendant de degrés de liberté de mouvement du véhicule.

**4.** - Appareil (10) selon la revendication 3, dans lequel au moins un des émetteurs de faisceau étroit supplémentaires est configuré pour émettre un signal d'onde continu modulé à travers un directeur de faisceau statique (60) vers le plan de référence universel, le capteur de référence de navigation (44) étant configuré pour recevoir une réflexion du signal modulé et déterminer la distance dudit véhicule par rapport audit plan de référence universel.

**5.** - Appareil (10) selon l'une quelconque des revendications précédentes, dans lequel le ou chaque capteur est configuré pour mesurer un déplacement de fréquence dû à un effet Doppler dans le signal réfléchi.

**6.** - Appareil (10) selon l'une quelconque des revendications précédentes, dans lequel le capteur de portée et de vitesse (46) comprend un récepteur cohérent.

**7.** - Appareil (10) selon l'une quelconque des revendications précédentes, dans lequel le ou chaque capteur est aligné avec l'émetteur.

**8.** - Appareil (10) selon l'une quelconque des revendications précédentes, dans lequel le ou chaque émetteur est un laser.

**9.** - Appareil (10) selon l'une quelconque des revendications précédentes, dans lequel le ou chaque émetteur est un système lidar cohérent.

**10.** - Appareil (10) selon l'une quelconque des revendications précédentes lorsque prises en dépendance de la revendication 1, comprenant en outre un processeur de localisation (34) configuré pour recevoir des données de vitesse provenant du capteur de référence de navigation (44), des données de portée et de vitesse sur la cible provenant du capteur de portée et de vitesse (46), des données temporelles provenant d'une horloge et des données sur une position initiale du véhicule, le processeur de localisation étant configuré pour calculer des données de navigation jusqu'à une destination en fonction des données reçues.

**11.** - Procédé pour fournir des données de navigation pour un véhicule (12), le véhicule (12) ayant un plan de référence de véhicule, le procédé comprenant :

disposer un émetteur à largeur de raie étroite (64) ayant une largeur de raie de 100 kHz ou moins, un directeur de faisceau dynamique (76) et un récepteur (74) dans ledit véhicule,

émettre, par ledit émetteur à largeur de raie étroite (64), un signal d'onde continu modulé à travers ledit directeur de faisceau dynamique (76) à une cible d'intérêt ;

recevoir une réflexion du signal émis par le récepteur (74), le récepteur (74) ayant un plan de référence de capteur ayant une relation connue avec le plan de référence de véhicule ;

mesurer la fréquence de la réflexion renvoyée par la cible reçue au niveau du récepteur et déterminer la portée et la vitesse dudit véhicule par rapport à ladite cible en fonction du plan de référence de capteur et du plan de référence de véhicule ;

disposer un émetteur à largeur de raie étroite supplémentaire (48) ayant une largeur de raie de 100 kHz ou moins, un directeur de faisceau statique (60) et un récepteur supplémentaire (58) dans ledit véhicule ;

émettre, par ledit émetteur à largeur de raie étroite supplémentaire (48), un signal d'onde continu non modulé à travers ledit directeur de faisceau statique vers un plan de référence universel ;

recevoir, au récepteur supplémentaire (58), une réflexion du second signal émis ; et déterminer la vitesse dudit véhicule par rapport audit plan de référence universel.

**12.** - Procédé selon la revendication 11, comprenant en outre :
disposer, dans ledit véhicule (12), une pluralité d'émetteurs à largeur de raie à faisceau étroit supplémentaires, le nombre d'émetteurs à largeur de raie à faisceau étroit supplémentaires dépendant de degrés de liberté de mouvement du véhicule.

**13.** - Procédé selon la revendication 11, comprenant en outre :

moduler le signal d'onde continu d'au moins un des émetteurs supplémentaires et diriger le signal modulé à travers un directeur de faisceau statique vers le plan de référence universel ; et, recevoir une réflexion du signal modulé au niveau du récepteur ou d'un récepteur supplémentaire et déterminer la distance dudit véhicule par rapport audit plan de référence universel.

Fig. 1

# Generalized Sensor System Reference Frames

Fig. 2

Fig. 3

Generalized Vehicle

Fig. 4

EP 3 775 992 B1

Navigation Reference Sensor

Fig. 5

- 44 Navigation Reference Sensor
- 48 Narrow Linewidth Emitter
- 50 Waveform Generator
- 52 Transmitter
- 54 Local Oscillator
- 56 Transmit/Receiver Boresight
- 58 Receiver
- 60 Static Beam Director
- 62
- 42 Range Doppler Processor

Area Range and Velocity Sensor

46

64 Narrow Linewidth Emitter

66 Waveform Generator

68 Transmitter

70 Local Oscillator

72 Transmit/Receiver Boresight

74 Receiver

76 Dynamic Beam Director

78

42 Range Doppler Processor

Fig. 6

# Range Doppler Processor Method

Fig. 7

## Location Processor Method Steps

96

98

**Obtain Range and Velocity of Universe in Sensor Reference Frame**

100

**Obtain Attitude and Heading of universe Relative to Sensor Frame**

102

**Apply Translation/Rotation Transformation of Sensor Case Frame to Vehicle Frame (Center of Gravity)**

**Apply Translation/Rotation Transformation of Vehicle Frame Relative to Universal Reference Frame**

104

106

**Obtain Range and Velocity of Target in Sensor Reference Frame**

108

**Obtain Attitude and Heading of Plurality of Target Relative to Sensor Frame**

110

**Apply Translation/Rotation Transformation of Sensor Case Frame to Vehicle Frame (Center of Gravity)**

**Apply Translation/Rotation Transformation of Target Relative to Universal Frame**

112

Fig. 8

24

## Pilot/Navigator Displays

*114*

Surface Relative Velocity

*116*  *118*  *119*

Vx  Vy  Vz

*12*  *126*

Angle of Attack

*124*

Velocity

*122*  *128*

Surface Relative Altitude  *120*

Flight Path Angle

Surface Relative Pitch Angle

**Fig. 9**

## Navigation Attributes

*130*

Side-slip Angle

*132*

Velocity

*124*

*12*

*12*

*134*

Surface Relative Roll Angle

Surface Relative Altitude  *120*

**Fig. 10**

EP 3 775 992 B1

## Coherent LIDAR Method

_136_

**138** — Narrow Linewidth Emitter (NLE)

→

**140** — Waveform Generator Produces Modulated Emitter

→

**142** — Modulated Emitter is Divided into Two Paths for Transmission and Detection

**144** — Transmitter Waveform is Amplified

→

**148** — Waveform is Transmitted to a Target and Return Beam is Received by the Beam Director

**146** — Local Oscillator Waveform is Relayed to Receiver

**150** — Received Signals Are Mixed With Local Oscillator

→

**152** — Signals are Processed to Obtain Distance and Velocity

→

**154** — Data is Provided to Location Processor

Fig. 11

EP 3 775 992 B1

## Algorithm to Determine Current Location

156

```
┌─────────────────────┐      ┌─────────────────────┐      ┌─────────────────────┐
│   158               │      │   160               │      │   162               │
│ Obtain Current      │      │ Start Clock and Start│     │ Determine Heading   │
│ Position From Internal│ ──▶ │ Movement            │ ──▶ │ (Compass, Star Tracker,│
│ or External Sources │      │                     │      │ Terrain Matching, Etc.)│
└─────────────────────┘      └─────────────────────┘      └─────────────────────┘
```

```
┌─────────────────────────────┐      ┌─────────────────────────────┐
│  164                        │      │                        166  │
│ NRS Measures Vehicle Velocity,│     │ ARVS Measures Range and Relative│
│ Height, Ground Relative Attitude,│ ──▶│ Speed of Objects and Vehicles in the│
│ Angle of Attack, and Side-slip Angle│  │ Environment For Avoidance   │
│ (Using the Ground as a Reference Plane)│ │ and Rendezvous              │
└─────────────────────────────┘      └─────────────────────────────┘
```

```
┌─────────────────────┐      ┌─────────────────────┐      ┌─────────────────────┐
│ Calculate New Position│     │ Calculate New       │      │ Send Data to GN&C   │
│ from Time, Speed, and│  ──▶ │ Positions of Other  │ ──▶  │ Computer and Return │
│ Direction Data      │      │ Objects and Vehicles│      │ to Step 2           │
└─────────────────────┘      └─────────────────────┘      └─────────────────────┘
      168                          170                          172
```

Fig. 12

EP 3 775 992 B1

GPS Satellite

Destination

Best Path

12

Fig. 13

Fig. 14

Fig. 15

In Vehicle Interface Display

30 MPH

65 MPH

0 MPH

Fig. 16

Intelligent Transportation System Area Situational Awareness

Fig. 17

Situational Awareness and Hazard Avoidance

12

Fig. 18

Situational Awareness and Hazard Avoidance

Fig. 19

Situational Awareness and Hazard Avoidance

12

Fig. 20

Fig. 21

*Fig.22*

Fig. 23

*Fig. 24*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008239279 A

**Non-patent literature cited in the description**

- **AMZAJERDIAN et al.** *Imaging flash LIDAR for safe landing on solar system bodies and spacecraft rendezvous and docking*

- **SONG et al.** *Impact of transmitting light's modulation characteristics on LFMCW Lidar systems*